# EUROPEAN PATENT APPLICATION

(11) **EP 4 622 386 A1**
(43) Date of publication of application: **24.09.2025**
(21) Application number: 23891300.8
(22) Date of filing: 24.10.2023
(51) Int. Cl.: H04W 76/15, H04W 72/0453, H04W 84/12

(54) **WIRELESS COMMUNICATION DEVICE, CONTROL METHOD, AND PROGRAM**

(30) Priority: 16.11.2022 JP 2022183735
(71) Applicant: CANON KABUSHIKI KAISHA, Tokyo 146-8501 (JP)
(72) Inventor: YOSHIKAWA Yuki, Tokyo 146-8501 (JP)
(74) Representative: Canon Europe Limited
(86) International application number: PCT/JP2023/038235
(87) International publication number: WO 2024/106145

(57) **Abstract**

A wireless communication device transmits a wireless frame compliant with an IEEE 802.11 series standard, establishes multiple links between the wireless communication device and another wireless communication device, and selects, in a case where the multiple links include a link in a prescribed frequency band and a link in a frequency band other than the prescribed frequency band, whether to use the link in the prescribed frequency band or the link in the frequency band other than the prescribed frequency band according to a type of frame to be transmitted by the transmitting means.

## Description

### Technical Field

The present invention relates to a wireless communication device compliant with IEEE 802.11.

### Background Art

The development of communication technologies such as wireless local area network (LAN) is being pursued in response to recent increases in the amount of data being communicated. The Institute of Electrical and Electronics Engineers (IEEE) 802.11 series standards are known to be major communication standards for wireless LAN. The IEEE 802.11 series standards include standards such as IEEE 802.11a/b/g/n/ac/ax/be.

Patent Literature 1 discloses the feature of executing wireless communication by orthogonal frequency-division multiple access (OFDMA) in the IEEE 802.11ax standard. In the IEEE 802.11ax standard, high peak throughput is achieved by executing wireless communication using OFDMA.

In the IEEE 802.11be standard, which is the successor to the IEEE 802.11ax standard, Multi-Link communication is being considered in which, for example, one access point (AP) establishes multiple links in parallel with one station (STA) via multiple frequency channels to communicate. Note that two or more links may be selected from the same frequency band (any of the 2.4 GHz band, the 3.6 GHz band, the 4.9 and 5 GHz band, and the 6 GHz band) or from respectively different frequency bands. An AP and a STA supporting Multi-Link are referred to as an AP Multi-Link device (MLD) and a STA MLD (or non-AP-MLD).

In addition, for further improvement in communication performance in the successor to IEEE 802.11be, Multi-Link communication executed using millimeter-wave bands such as the 45 GHz band and 60 GHz band is being considered.

### Citation List

### Patent Literature

PTL 1: Japanese Patent Laid-Open No. 2018-50133

### Summary of Invention

### Technical Problem

As mentioned above, the use of millimeter-wave bands in Multi-Link communication is being considered. For example, if Multi-Link is established by establishing multiple links via a microwave band and a millimeter-wave band, the highly directional nature of millimeter-wave bands means that it is arguably preferable to transmit and receive important information such as scheduling on the microwave-band link, even if the information pertains to the millimeter-wave band.

Since different frequency bands may have different characteristics in this way, when multiple links using mutually different frequency bands are established, it is desirable to use the multiple links suitably according to purpose.

### Solution to Problem

Accordingly, an objective of the present invention is to use suitable frequency bands to transmit information in a communication device capable of operating in multiple frequency bands.

To achieve this objective, a wireless communication device according to an aspect of the present invention is characterized by including: a transmitting means for transmitting a wireless frame compliant with an IEEE 802.11 series standard; an establishing means for establishing multiple links between the wireless communication device and another wireless communication device; and a selecting means for selecting, in a case where the multiple links include a link in a prescribed frequency band and a link in a frequency band other than the prescribed frequency band, whether to use the link in the prescribed frequency band or the link in the frequency band other than the prescribed frequency band according to a type of frame to be transmitted by the transmitting means.

### Advantageous Effects of Invention

According to the present invention, information can be transmitted using suitable frequency bands in a communication device capable of operating in multiple frequency bands.

Other features and advantages of the present invention will become apparent from the following description with reference to the attached drawings. Note that in the attached drawings, same or similar components are denoted with the same reference signs.

### Brief Description of Drawings

The attached drawings are included in, and form part of, the specification and are used to illustrate embodiments of the present invention and to explain the principles of the present invention in conjunction with the description thereof.
[Fig. 1] Fig. 1 is a diagram illustrating a network configuration to which the present invention can be applied.
[Fig. 2] Fig. 2 is a diagram illustrating a hardware configuration of an AP 101 and a STA 102.
[Fig. 3] Fig. 3 is a diagram illustrating a functional configuration of an AP 101 and a STA 102.
[Fig. 4] Fig. 4 is a flowchart of connection processing by an AP 101 and a STA 102.
[Fig. 5] Fig. 5 is a sequence diagram of an AP 101 and a STA 102.
[Fig. 6] Fig. 6 is a diagram illustrating a (Basic) Multi-Link Element format.
[Fig. 7] Fig. 7 is a table indicating an Action Frame category list.
[Fig. 8] Fig. 8 is a table indicating an EHT Action field list.
[Fig. 9] Fig. 9 is a table indicating a Protected EHT Action field list.
[Fig. 10] Fig. 10 is a diagram illustrating an EHT Action Frame format in Example 1.
[Fig. 11] Fig. 11 is a diagram illustrating a Protected EHT Action Frame format in Example 1.
[Fig. 12] Fig. 12 is a table indicating a Control Frame identification code list.
[Fig. 13] Fig. 13 is a diagram illustrating a Multi-Link Control Frame format.
[Fig. 14] Fig. 14 is a diagram illustrating an Action Frame format in Example 2.

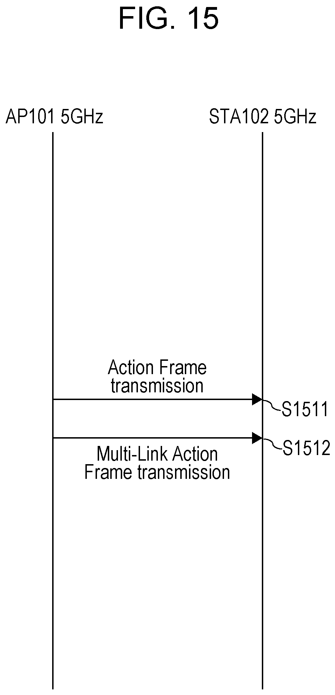

[Fig. 15] Fig. 15 is a sequence diagram during the transmission of an Action Frame in Example 3.

### Description of Embodiments

The following refers to the attached drawings to describe an embodiment of the present invention in detail. Note that the configurations indicated in the following embodiment are merely examples, and the present invention is not limited to the configurations illustrated in the drawings.

### (Configuration of wireless communication system)

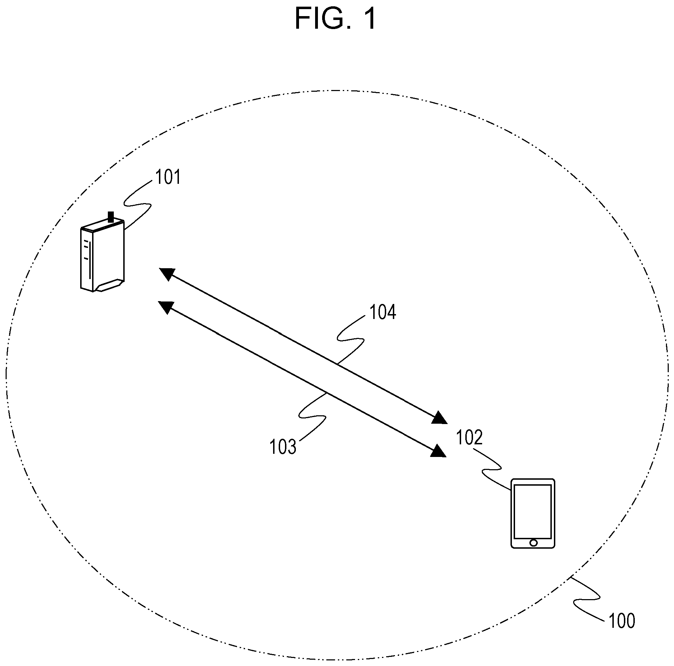

Fig. 1 illustrates an example of the configuration of a network according to the present embodiment. Fig. 1 illustrates a configuration in which a station (STA 102) joins a network 100 constructed by an access point (AP 101).

The AP 101 and the STA 102 can execute wireless communication compliant with the IEEE 802.11 Ultra High Reliability (UHR) standard, which is the successor to IEEE 802.11be. Note that IEEE is an acronym for the Institute of Electrical and Electronics Engineers. Each communication device can communicate in microwave bands, including the 2.4 GHz band, the 3.6 GHz band, the 5 GHz band, and the 6 GHz band, and can also communicate on frequencies in the 45 GHz band and the 60 GHz band, which are referred to as millimeter-wave bands. Note that in the present example, millimeter-wave bands refer to frequency bands above 45 GHz. The frequency bands that each communication device uses are not limited to the above, and for example, frequency bands below 1 GHz, also referred to as sub-1 GHz bands, may also be used. The AP 101 and the STA 102 can operate with a channel bandwidth of 20 MHz, 40 MHz, 80 MHz, 160 MHz, 320 MHz, 480 MHz, or 640 MHz in the microwave bands. The AP 101 and the STA 102 can operate with a channel bandwidth of 2.16 GHz, 4.32 GHz, 6.48 GHz, or 8.64 GHz in the millimeter-wave bands. Note that the AP 101 and the STA 102 may also be configured to operate with a channel bandwidth of less than 2.16 GHz in the millimeter-wave bands, irrespective of the above. The AP 101 and the STA 102 may also be configured to operate with a channel bandwidth of 240 MHz, 560 MHz, or the like in the microwave bands.

Note that the AP 101 and the STA 102 support the IEEE 802.11 UHR standard, but in addition, may also support legacy standards, that is, standards prior to the IEEE 802.11 UHR standard. Specifically, the AP 101 and the STA 102 may also support at least of the IEEE 802.11a/b/g/n/ac/ax/be standards. In addition to the IEEE 802.11 series standards, the AP 101 and the STA 102 may also support other communication standards, such as Bluetooth^{®}, NFC, UWB, ZigBee, and MBOA. Note that UWB is an acronym for ultra-wideband, and MBOA is an acronym for Multi Band OFDM Alliance. NFC is an acronym for near-field communication. UWB includes wireless USB, wireless 1394, WiNET, and the like. The AP 101 and the STA 102 may also support a communication standard for wired communication, such as wired LAN.

Specific examples of the AP 101 include a wireless LAN router and a personal computer (PC), but the AP 101 is not limited thereto. The AP 101 may also be an information processing device such as a wireless chip that can execute wireless communication compliant with the IEEE 802.11 UHR standard. Specific examples of the STA 102 include a camera, a tablet, a smartphone, a PC, a mobile phone, a video camera, and a headset, but the STA 102 is not limited thereto. The STA 102 may also be an information processing device such as a wireless chip that can execute wireless communication compliant with the IEEE 802.11 UHR standard.

The AP 101 and the STA 102 execute Multi-Link communication, in which multiple links are established in parallel via multiple frequency channels to communicate. A communication device capable of executing Multi-Link communication is referred to as a Multi-Link device (MLD), and an AP capable of executing Multi-Link communication is referred to as an AP MLD. A STA capable of executing Multi-Link communication is referred to as a STA MLD (or non-AP-MLD). For example, the AP 101 and the STA 102 can establish a link 103 via a first frequency channel in the 5 GHz band to communicate. In parallel with this, the AP 101 and the STA 102 can establish a link 104 via a second frequency channel in the 60 GHz band to communicate. In this case, the AP 101 and the STA 102 execute Multi-Link communication that maintains the second link 104 via the second frequency channel in parallel with the link 103 via the first frequency channel. By establishing multiple links in parallel via multiple frequency channels in this way, the AP 101 and the STA 102 can achieve improved throughput for communication.

Note that Multi-Link communication is not limited to two links between communication devices and may also establish three or more links in parallel. For example, the AP 101 and the STA 102 may establish a third link in the 60 GHz band in addition to the link 103 in the 5 GHz band and the link 104 in the 45 GHz band. Multiple links may also be established via multiple different frequency channels included in the same frequency band. For example, Ch 2 in the 60 GHz band may be established as a first link, and in addition, Ch 35 in the 60 GHz band may be established as a second link. Note that links in the same frequency band and links in different frequency bands may also be mixed. For example, the AP 101 and the STA 102 may establish the link 103 on Ch 2 in the 60 GHz band, and in addition, establish a link on Ch 35 in the 60 GHz band and a link on Ch 15 in the 6 GHz band. By establishing multiple links in different frequency bands, even if a certain frequency band is congested, the AP 101 and the STA 102 can communicate in a different frequency band, and thus prevent lower throughput and communication latency in communication with the STA 102.

Note that each link is assigned a Link ID specific to the network in which the links are constructed. As an example, the following describes the case where the STA 102 and a STA 112 join a network constructed by the AP 101. Assume that the AP 101 and the STA 102 establish a link using Ch 52 in the 5 GHz band, and that the link is assigned Link ID = 1. Next, the AP 101 and the STA 112 establish a link using Ch 52 in the 5 GHz band, and the link is similarly assigned Link ID = **1.** Assume that the AP 101 and the STA 102 establish a link using Ch 105 in the 6 GHz band, and that the link is assigned Link ID = **2.** Next, the AP 101 and the STA 112 establish a link using Ch 105 in the 6 GHz band, and the link is similarly assigned Link ID = **2.** These values are merely one example, and different values may be assigned. Link IDs that are specific to the constructed link and/or the STA may also be assigned.

In the IEEE 802.11 series standards, the frequency bands in the 2.4 GHz, 5 GHz, and 6 GHz bands contain multiple frequency channels (Ch), and the channel bandwidth of each frequency channel is defined to be 20 MHz. The channel bandwidth of each frequency channel in the 45 GHz band is defined to be 540 MHz, and the channel bandwidth of each frequency channel in the 60 GHz band is defined to be 1080 MHz or 2160 MHz. Herein, a frequency channel refers to a frequency channel defined in the IEEE 802.11 series standards, and multiple frequency channels are defined in each of the 2.4 GHz, 5 GHz, 6 GHz, 45 GHz, and 60 GHz frequency bands. Note that adjacent frequency channels may also be bonded to utilize a bandwidth of 40 MHz or more on a single link.

### (Configuration of AP/STA)

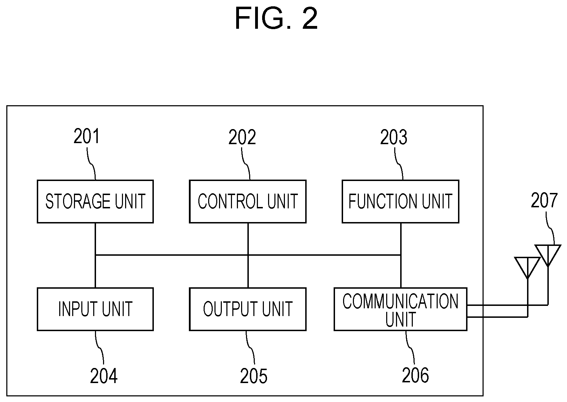

Fig. 2 illustrates an example of the hardware configuration of the AP 101 according to the present embodiment. The AP 101 includes a storage unit 201, a control unit 202, a function unit 203, an input unit 204, an output unit 205, a communication unit 206, and an antenna 207. Note that there may be multiple antennas.

The storage unit 201 is formed from one or more memories such as ROM and/or RAM and stores various information, such as a computer program for performing various operations described later and communication parameters for wireless communication. ROM and RAM are acronyms for read-only memory and random-access memory, respectively. Note that, besides memories such as ROM and RAM, the storage unit 201 may also use storage media such as a flexible disk, a hard disk, an optical disc, a magneto-optical disc, a CD-ROM, a CD-R, magnetic tape, a non-volatile memory card, or a DVD. The storage unit 201 may also be provided with multiple memories or the like.

The control unit 202 is formed from one or more processors such as a CPU and/or an MPU for example, and controls the AP 101 as a whole by executing a computer program stored in the storage unit 201. Note that the control unit 202 may also control the AP 101 as a whole through cooperation between a computer program stored in the storage unit 201 and an operating system (OS). The control unit 202 also generates data and signals (wireless frames) to be transmitted in communication with other communication devices. Note that CPU and MPU are acronyms for central processing unit and microprocessing unit, respectively. The control unit 202 may also be provided with multiple processors, such as multiple cores, and control the AP 101 as a whole using the multiple processors.

The control unit 202 also controls the function unit 203 to execute prescribed processing such as wireless communication, imaging, printing, and projection. The function unit 203 is hardware with which the AP 101 executes the prescribed processing.

The input unit 204 accepts various operations from a user. The output unit 205 provides various output to the user via a monitor screen and/or a speaker. In this context, the output provided by the output unit 205 may be visual presentation on the monitor screen, sound output by the speaker, vibration output, and/or the like. Note that both the input unit 204 and the output unit 205 may also be achieved as a single module, like a touch panel. The input unit 204 and the output unit 205 may each be integrated with, or discrete from, the AP 101.

The communication unit 206 controls wireless communication compliant with the IEEE 802.11be standard. The communication unit 206 may also control wireless communication compliant with other IEEE 802.11 series standards in addition to the IEEE 802.11be standard, and also control wired communication such as wired LAN. The communication unit 206 controls the antenna 207 to transmit and receive signals for wireless communication generated by the control unit 202.

Note that if the AP 101 supports the NFC standard, the Bluetooth standard, and/or the like in addition to the IEEE 802.11be standard, the communication unit 206 may also control wireless communication compliant with these communication standards. If the AP 101 can execute wireless communication compliant with multiple communication standards, the AP 101 may be configured to have a separate communication unit and antenna corresponding to each of the communication standards. The AP 101 communicates data, such as image data, document data, and video data, with the STA 102 via the communication unit 206. Note that the antenna 207 may be configured to be discrete from the communication unit 206, or may be combined with the communication unit 206 to form a single module.

The antenna 207 is capable of communication in the 2.4 GHz band, the 5 GHz band, the 6 GHz band, the 45 GHz band, and the 60 GHz band. In the present embodiment, the AP 101 has two antennas, but may also have three or more. The AP 101 may also have a different antenna for each frequency band. If the STA 102 has multiple antennas, the STA 102 may also have a communication unit 206 corresponding to each antenna.

Note that the STA 102 has a similar hardware configuration to the AP 101.

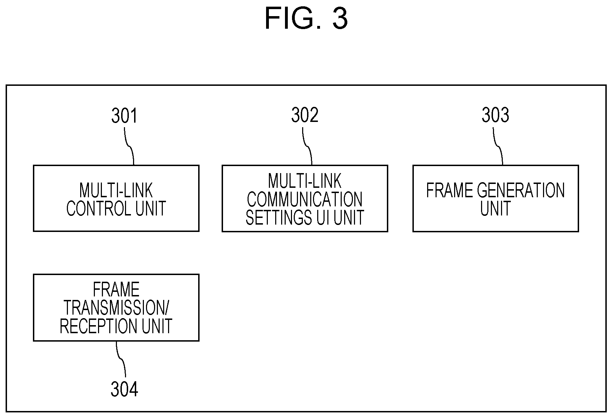

Fig. 3 illustrates a block diagram of a functional configuration of the AP 101 according to the present embodiment. Note that the STA 102 has a similar configuration.

The AP 101 includes a Multi-Link control unit 301, a Multi-Link communication settings UI unit 302, a frame generation unit 303, and a frame transmission/reception unit 304.

The Multi-Link control unit 301 is a block that controls communication start processing for establishing one or more links to be used by the AP 101 for wireless communication with the STA 102, processing for adding or removing links after communication is started, and communication end processing for removing all links. Connection processing specifically involves authentication processing, association processing, and 4-way handshake (4WHS) processing.

The Multi-Link communication settings user interface (UI) unit 302 is a block that provides a UI enabling the user to input settings for Multi-Link communication by the AP 101 from an operation screen of the AP 101.

The frame generation unit 303 is a block that generates frames for frame exchange when communicating with a connected STA.

The frame transmission/reception unit 304 transmits wireless frames, including Beacon, Probe Response, and data frames generated by the frame generation unit 303, and receives wireless frames from the partner device. In the case of the STA 102, the frame transmission/reception unit 304 transmits wireless frames, including Probe Request frames and data frames generated by the frame generation unit 303, and receives wireless frames from the partner device.

### (Flow of processing)

The following describes the flow of processing executed by the AP and STA having the configuration described above, a sequence in the wireless communication system, and the like.

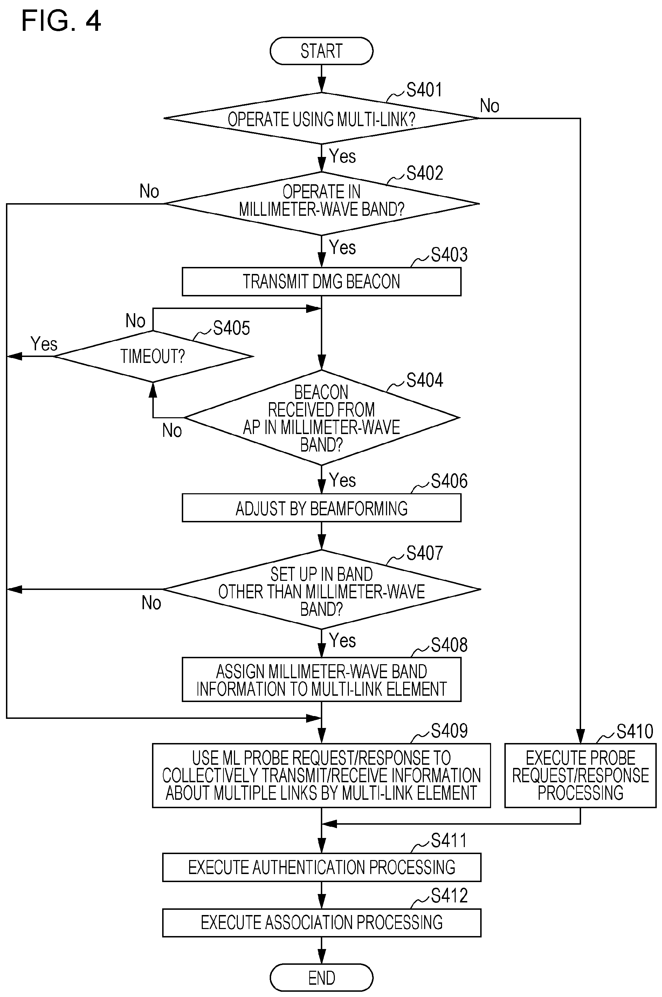

Fig. 4 is a flowchart illustrating the flow of processing performed by having the control unit 302 execute a program stored in the storage unit 201 of the STA 102. This flowchart illustrates processing for when the STA 102 establishes a connection with the AP 101. The processing is started when the STA 102 attempts to establish a connection with the AP 101, such as when the STA 102 is powered on, when the STA 102 receives an instruction to connect to the AP 101, or when wireless functions are turned on. Note that establishing a connection means entering a state that allows signals and data to be transmitted and received, and establishing a communication channel or transmission path (link) in a state that allows for communication between a pair of communication devices.

First, the STA 102 determines whether or not to establish Multi-Link with the AP 101 (S401). This procedure may be determined according to an instruction by the user, or may be implemented automatically by an application or the OS. Note that Multi-Link (ML) in the present example refers to the multiple links that are established when a pair of communication devices (MLDs) establish multiple links in parallel via multiple frequency channels. Also, establishing Multi-Link means establishing multiple links between a pair of communication devices.

In the case of determining not to establish Multi-Link in S401, a connection is established by connection processing (S410 to S412) for establishing one link with the AP 101, and the processing ends.

In the case of determining to establish Multi-Link in S401, it is determined whether or not to establish at least one link in the millimeter-wave bands (S402). Note that in the present example, it is determined whether or not to establish a link in the 45 GHz and 60 GHz bands.

In the case of determining not to establish a link in the millimeter-wave bands in S402, connection processing for establishing multiple links as Multi-Link connection processing compliant with the IEEE 802.11be standard is performed in one of the frequency channels used to establish the multiple links (S409).

Upon confirming in S402 that Multi-Link communication including the millimeter-wave bands is to be performed, a directional multi-gigabit (DMG) Beacon is transmitted (S403). A DMG Beacon refers to a Beacon that is transmitted/received only in the millimeter-wave bands, and is mainly used to determine a sector number described later.

Next, it is determined whether or not a Beacon or a DMG Beacon is received from the AP MLD operating in a millimeter-wave band (S404). Note that S404 may also be performed before S403.

In S404, if a Beacon or a DMG Beacon is not received from the AP in a millimeter-wave band, in S405 it is determined whether or not a timeout has occurred (S405). Upon determining that a timeout has occurred, the flow proceeds to S409, connection processing for Multi-Link communication is executed using a frequency band other than a millimeter-wave band (S409, S411, S412), and the flowchart ends.

The Beacon or DMG Beacon received in S404 is used to perform beamforming training (S406). Because of the highly directional nature of the millimeter-wave bands, it is essential to adjust radio waves by beamforming. For this reason, when performing Multi-Link communication that includes links in the millimeter-wave bands, it is preferable to transmit and receive radio waves of some kind via a millimeter-wave band before a connection is established, even if the processing for connecting multiple links is to be performed collectively in a frequency band other than a millimeter-wave band.

S406 is assumed to be an adjustment phase for determining, through training, the sector to be used by the AP 101. A sector refers to the position of the STA 102 relative to the AP 101, and a sector number refers to a value assigned to each physical direction in which the AP 101 emits radio waves.

The control for selecting an optimal antenna pattern between partner communication devices is divided into the two stages of Sector-level sweep (SLS) and Beam Refinement Protocol (BRP). SLS has four elements: Initiaotor SectorSweep (ISS), Responder Sector sweep (RSS), Sector sweep (SSW) Feedback, and SSW ACK. The entity that performs ISS is referred to as the Initiator, and the entity that performs RSS is referred to as the Respnder. The roles of Initiator and Respnder may be fulfilled by the AP 101 and the STA 102 or vice versa, but the present example assumes that the AP 101 is the Initiator and the STA 102 is the Responder. Also, an antenna pattern is a parameter related to the antenna radiation characteristics.

The following describes detailed processing from S403 to S406.

The Initiator (AP 101) transmits DMG Beacon frames or SSW frames to the Responder (STA 102) in ISS. At this point, the Initiator transmits the frames while varying the physical transmission direction (radio wave antenna transmission pattern) and the sector number of each frame. Note that there are two types of sector numbers, namely Transmit Sector sweep (TXSS) and Receive Sector Sweep (RXSS), which can be handled as transmit and receive sector numbers, respectively. The sector numbers transmitted by the Initiator in ISS are handled by TXSS.

The Responder, upon receiving frames from the Initiator, selects the sector number that is the antenna pattern with the best reception sensitivity. The Responder then transmits the selected sector number and its own sector number to the Initiator. The Responder may also transmit one or multiple frames in RSS. In the case of multiple frames, the Responder transmits the frames to the Initiator while changing the sector number and the physical transmission direction, in the same way as the Initiator. Once the Initiator and the Responder have both received and selected sector numbers, SSW feedback is transmitted from the Initiator, and the one sector number with the antenna pattern having the best reception sensitivity is finalized. Upon receiving the SSW feedback, the Responder responds with the SSW ACK.

Note that a more refined antenna pattern may be determined in the subsequent Beam Refinement Protocol (BRP). The AP 101 and the STA 102 exchange BRP frames to obtain the singal-to-noice ratio (SNR) and channel measurement feedback, which allows for fine adjustment of the antenna pattern. Also, BRP may be performed only when necessary, and does not necessarily have to be performed at this point.

The above describes detailed processing from S403 to S406.

Once the selection of an antenna pattern for transmission by beamforming is complete in S406, one or both of information pertaining to the antenna pattern of the host device and capability information to be used in a millimeter-wave band is assigned to a Multi-Link Element (Basic Multi-Link Element) (S408). Note that the processing from S403 to S406 need not be performed if the connection processing is performed collectively in a frequency band other than a millimeter-wave band. In the case of performing Multi-Link setup collectively in a millimeter-wave band, the information acquired in S406 is not assigned to a Multi-Link Element, and link information about a frequency band different from a millimeter-wave band is assigned to a Multi-Link Element. In the case of performing the Multi-Link connection processing collectively on a link using a frequency channel in a millimeter-wave band, an ML Probe Request and Response are transmitted and received by radiowave transmissions based on the result of the adjustment by beamforming. Note that the Multi-Link Element will be described later.

Next, a Multi-Link Element in which information specific to each link is assigned in a Per-STA Profile field 606 for each link is transmitted to the AP 101 in an ML Probe Request, thereby informing the partner about information specific to each link. In the case of the AP 101, this information is transmitted to the STA 102 in an ML Probe Response (S409).

Thereafter, the connection processing is performed via authentication processing (S411) and association processing (S412), and the flowchart ends. Note that a 4-way handshake and group key exchange may also be subsequently performed to exchange cryptographic keys before Multi-Link is established.

On the other hand, radio waves in the millimeter-wave bands have limited reach compared to radio waves in the 2.4 GHz band, the 5 GHz band, and the 6 GHz band. This could result in a situation where radio waves arrive in other bands, but do not arrive in the millimeter-wave bands only. Therefore, if the connection processing is performed in a frequency band in the millimeter-wave bands, there is a possibility that the transmission and reception of radio waves will be interrupted during the Multi-Link connection processing, and the processing may thus take more time as compared to performing connection processing via microwaves. Accordingly, it is desirable to perform the Multi-Link connection processing collectively for multiple links in a frequency channel other than a millimeter-wave band, if the connection processing can be performed in that frequency channel. For this reason, S407 may be configured such that the Multi-Link connection processing is always performed in a frequency band different from the millimeter-wave bands.

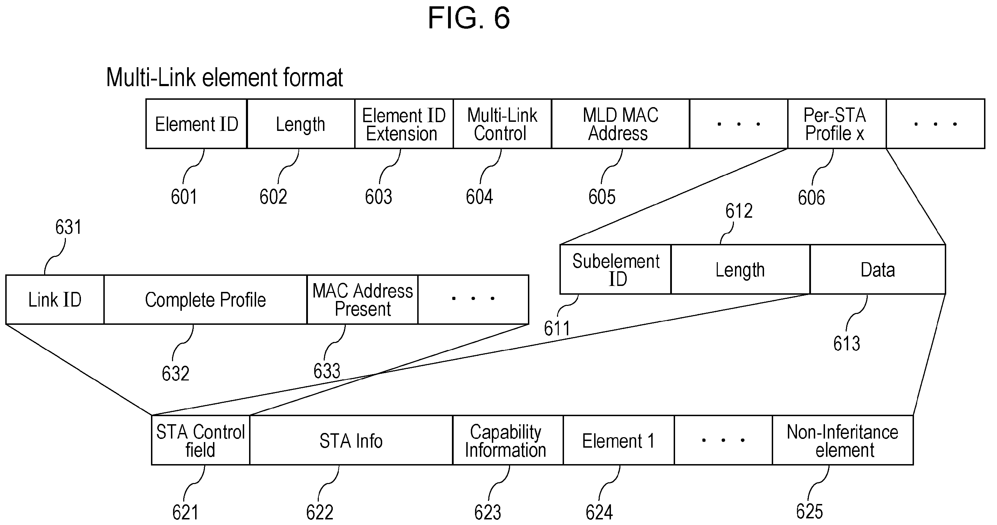

Fig. 6 illustrates an example of the format of a Multi-Link Element (Basic Multi-Link Element) to which the information acquired in S406 is assigned. The information acquired in S406 is considered to be an optimal antenna pattern, radio wave measurement results for channels, and the like. Also, in the case using the adjustment result as a basis for transmitting the Probe Request, Probe Response, ML Probe Request, and ML Probe Response in a millimeter-wave band, the result of the adjustment in S406 is transmitted by being included in the PHY preamble. Otherwise, each frame is transmitted according to a period suited to the result of the adjustment. Note that the radio wave measurement results and the like need not be at the time of the connection processing. The Multi-Link Element described here is assigned to each frame adjusted in S406.

The Multi-Link Element includes: Element ID 601, Length 602, Element ID Extension 603, Multi-Link Control 604, MLD MAC Address 605, and Per-STA Profile 606. Note that in the connection processing according to the present embodiment, Per-STA Profile 606 has Per-STA Profile fields equal in number to the multiple links by which Multi-Link is to be established, excluding the link used to perform the Multi-Link connection processing. Also, the Action Frame and the Control Frame are assumed to contain only as many Per-STA Profile fields as the number of links involved.

Element ID 601 and Element ID Extension 603 indicate that the current Element is a Multi-Link Element. Length 602 indicates the overall length of the Multi-Link Element.

Multi-Link Control 604 contains a bitmap indicating what kind of information is included in a Common Info field, and a Type field indicating the type of Multi-Link Element, which are described later.

The fields between MLD MAC Address 605 and Per-STA Profile 606 contain information common to the links established from field 605. MLD MAC Address 605 and Per-STA Profile 606 are determined to be included in the Multi-Link Element or not on the basis of a value indicated in Multi-Link Control.

Per-STA Profile 606 is determined to be included in the Multi-Link Element or not according to the type indicated by the Type field in Multi-Link Control 604 mentioned above.

Per-STA Profile 606 contains information about each link.

Per-STA Profile 606 further includes Subelement ID 611, Length 612, and Data 613. Data 613 contains the detailed information about each link indicated below.

Data 613 further includes STA Control field 621, STA Info 622, Capability Information 623, Element 1 624, and Non-Inferitance element 625.

STA Control field 621 further includes Link ID 631, Complete Profile 632, and MAC Address Present 633. Link ID 631 indicates a link number. For example, in the case of the present embodiment, Link ID 631 indicates 1 when indicating the link 103 in Fig. 1, and 2 when indicating the link 104 in Fig. 1.

Complete Profile 632 contains a flag indicating whether or not all link-related information is included. For example, if the STA 102 sends a response requesting all link-related information for the AP 101, Complete Profile 632 is set to 1 and the fields that come after 622 contain all information included in the Beacon to be transmitted on each link.

As an example, consider the case of assigning a Multi-Link Element in a band other than a millimeter-wave band. Since the link 103 in Fig. 1 is established in the 60 GHz band, an Element different from the Element assigned to the Beacon and the Probe Request/Response in the 5 GHz band, which is where the other link is established, is assigned independently to frames such as the Beacon and the Probe Request/Response transmitted in the 60 GHz band. When an independent Element is included in the 60 GHz band, the Element is assigned to the fields that come after Element 1 field 624, described later, in the Multi-Link Element assigned in the 5 GHz band. Note that when an Element in common with the Element assigned in the 5 GHz band is also assigned in the 60 GHz band, information about the Element may also be omitted from Element 1 field 624. Similarly, information may be omitted if the information does not need to be reported before establishing a connection.

When Complete Profile 632 is set to 0, some or all of the Elements to be included in Element 1 field 624 may be omitted. The field that comes after MAC Address Present 633 indicates which fields are in addition to the fields indicated by the subsequent field STA Info 622.

Note that present embodiment assumes that Complete Profile 632 is set to 0 in a Probe Request/Response and that Complete Profile 632 is set to 1 in an ML Probe Request/Response.

In the fields between Element 1 624 and Non-Inferitance element 625, an independent Element for each link is assigned.

Consider the case in which the Multi-Link Element described above is assigned in the 5 GHz in the present example, and information about a millimeter-wave band is assigned in Element 1 field 624.

In this case, the Antenna Sector ID Pattern Element defined in, for example, IEEE 802.11 described may be assigned to the Element 1 field as the element to which the information acquired in S406 is to be assigned.

The sector number selected in SLS is assigned to the Antenna Sector ID Pattern Element. At this point, the sector number is based on the information acquired in S406.

Any of the following may be added to the Element to which the information acquired in S406 is assigned: Wakeup Schedule Element, Extended Schedule Element, STA Availability Element, DMG TSPEC Element, Next DMG ATI Element, DMG Capabilities Element, DMG Operation Element, DMG BSS Parameter Change Element, DMG Beam Refinement Element, Channel Management Feedback Element, Awake Window Element, Next PCP List Element, PCP Handover Element, DMG Link Margin Element, Switching Stream Element, SessionTransition Element, Dynamic Tone Pairing Report Element, Cluster Report Element, Relay Capabilities Element, Relay Transfer Parameter Set Element, BeamLink Maintenance Element, DMG Link Adaptation Acknowledgment Element, ECPAC Policy Element, Cluster Time Offset Element, Channel Measurement Feedback Element, EDMG Capabilities Element, EDMG OperationElement, QoS Triggered UnschedulesElement, Unsolicited Block Ack Extension Element, TDD Slot StructureElement, TDD Slot Schedule Element, and TDD Route Element.

Note that when a Multi-Link Element is included in each frame described later, Element 1 field 624 may contain information about an Action field of an Action Frame and/or the frame format of a Control Frame instead of the Element. It is sufficient if the Multi-Link Element information includes Link ID field 631, and the Multi-Link Element information may contain only the frame body and Link ID field. Otherwise, the Multi-Link Element information may contain only MAC Address and the frame body, or may contain Link ID field, MAC Address field, and the frame body. Also, there may be one or multiple Link ID fields and/or MAC Address fields.

This concludes the description of an example of the format of a Multi-Link Element (Basic Multi-Link Element) according to the present embodiment using Fig. 6.

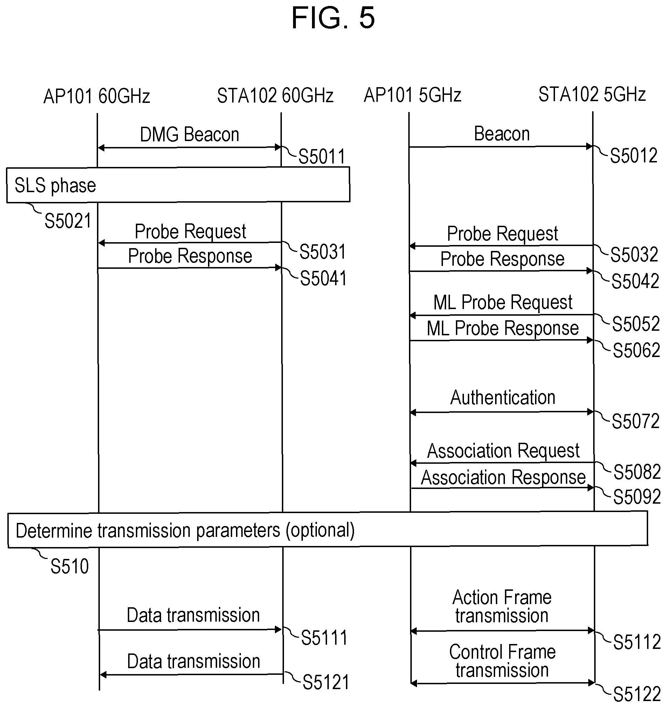

Next, the sequence diagram in Fig. 5 will be used to describe the flow of processing executed by the AP 101 and the STA 102.

The AP 101 transmits a DMG Beacon in the 60 GHz band, which is a millimeter-wave band, and transmits a Beacon in the 5 GHz band, which is a band other than a millimeter-wave band (S5011, S5012). The STA 102 also transmits a DMG Beacon in the 60 GHz band (S5011). The transmission of a DMG Beacon by the STA 102 may also be omitted. The DMG Beacon transmission and reception is used as a basis for performing a sector level sweep (SLS) in the 60 GHz band (S5021) and ascertaining the relative positions of the AP 101 and the STA 102. These values are used as a basis for communicating a Probe Request (S5031) and a Probe Response (S5041) in the 60 GHz band.

A Probe Request (S5032) and a Probe Response (S5042) are similarly communicated in the 5 GHz band. Note that since S5072 to S5092 are performed in the 5 GHz band, S5011 to S5041 need not be performed in the 60 GHz band.

Next, an ML Probe Request (S5052) and an ML Probe Response (S5062) are transmitted and received to obtain information about each link. S5052 and S5062 are a frame exchange for obtaining link information that could not be acquired by Probe Response. However, the frame exchange in S5052 and S5062 need not be performed if, for example, the connection in question is a connection after the first and parameters have been exchanged in the first connection.

Also, the Multi-Link Element illustrated by way of example in Fig. 6 is assigned in the ML Probe Request (S5052) and the ML Probe Resopnse (S5062). In this case, the ML Probe Resopnse is transmitted with Complete Profile set to 1 in the Multi-Link Element.

Note that the Multi-Link Element itself may also be assigned in the Probe Request (S5032) and the Probe Response (S5042). In the present embodiment, it is assumed that the connection sequence from the ML Probe Request (S5052) is performed at 5 GHz.

Next, Authentication (S5072) is performed, and the AP 101 and the STA 102 authenticate each other. Additionally, a parameter exchange for establishing a connection is performed in Association Request (S5082) and Association Response (S5092). The exchanged parameters are used as a basis for determining transmission parameters when connected (S510). Note that a 4-way handshake for communication encryption may also be performed in S510. Once mutual authentication and a key exchange for encryption are finished, data communication and control frame exchange are started (S5111, S5121, S5112, S5122).

### (Example 1)

In the present example, the Action Frame and the Control Frame are transmitted and received on the link 103 in the 5 GHz band, which is a band other than a millimeter-wave band. The following also describes a Multi-Link Action Frame and a Multi-Link Control Frame for including control information pertaining to a link in the 60 GHz band in frames transmitted and received in the 5 GHz band.

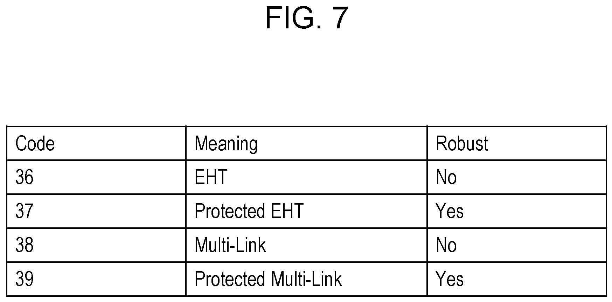

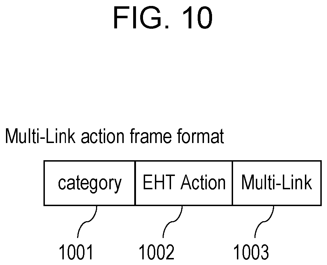

Fig. 10 illustrates an example of the Multi-Link Action Frame format. The Multi-Link Action Frame includes: Category field 1001, EHT Action field 1002, and Multi-Link field 1003. Note that EHT Action field 1002 need not be present. Category field 1001 uses the values indicated in Fig. 7 to indicate that the frame is a Multi-Link Action Frame.

Fig. 7 is an example of a list of Category numbers for identifying the Multi-Link Action Frame. In this example, an Action Frame category for Multi-Link is assigned separately from the existing Action Frame category. Note that a UHR category number may also be used instead of Multi-Link.

In the present example, Category field 1001 is assumed to have a value of 38. EHT Action field 1002 indicates the type of Multi-Link Action Frame. For example, the value may be set to 0 to indicate that the information is about another link. Multi-Link field 1003 indicates the Multi-Link Element illustrated in Fig. 6. Note that, as described in Fig. 6, only some elements of the Multi-Link Element may be indicated here. In Multi-Link field 1003, Element 1 field 624 of the Multi-Link Element may use the category number of another Action Frame to indicate the Action Frame format. This allows information about another link to be transmitted to the partner device as an Action Frame. For example, in the case of wanting to transmit an ADDBA Request on another link, the other Link ID is indicated in Link ID field 631. Element 1 field 624 also includes a Category field, a Block Ack Action field, a Dialog Token field, a Block Ack Parameter Set field, a Block Ack Timeout Value field, a Block Ack Starting Sequence Control field, and the like.

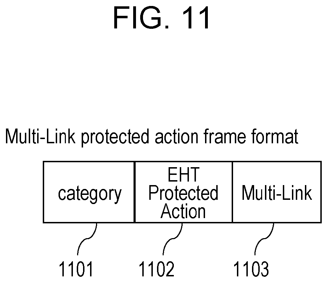

Fig. 11 illustrates an example of a Protected Multi-Link Action Frame format. As this format is the same as in Fig. 10, a description is omitted. In the present example, Category field 1101 is assumed to have a value of 39.

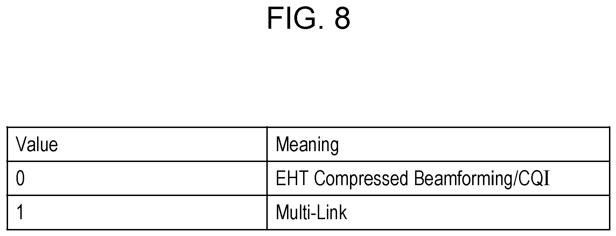

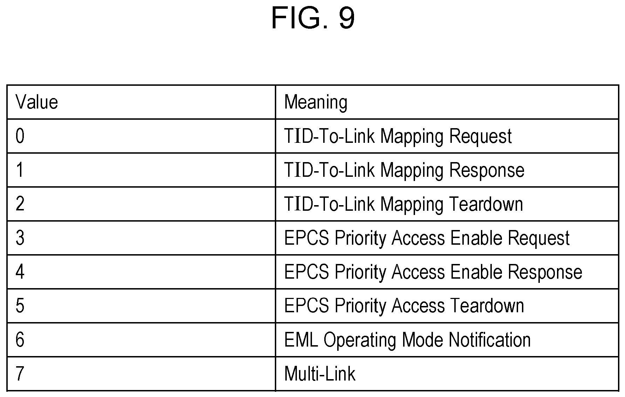

As an example different from the above, it is also conceivable to set Category field 1001 to a value of 36 and format the Multi-Link Action Frame as an EHT Action. Fig. 8 illustrates an EHT Action field 1002 list for this case. When EHT Action field 1002 is set to a value of 1, the Multi-Link Action Frame illustrated in Fig. 10 is formatted. Another conceivable case is to set Category field 1101 to a value of 37 and format a Protected Multi-Link Action frame as a Protected EHT Action. Fig. 9 illustrates an EHT Action field 1102 list for this case. When the value is set to 7, the Protected Multi-Link Action Frame illustrated in Fig. 11 is formatted.

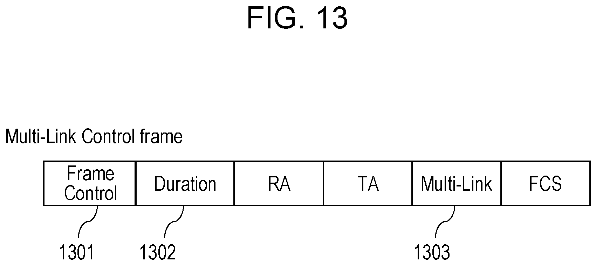

Next, Fig. 13 illustrates an example of the frame format of the Multi-Link Control Frame. The Multi-Link Control Frame includes: Frame Control field 1301, Duration field 1302, and Multi-Link field 1303.

Frame Control field 1301 includes a Type subfield, a Subtype subfield, and a Control Frame Extension subfield, and indicates that the current frame is a Multi-Link Control Frame.

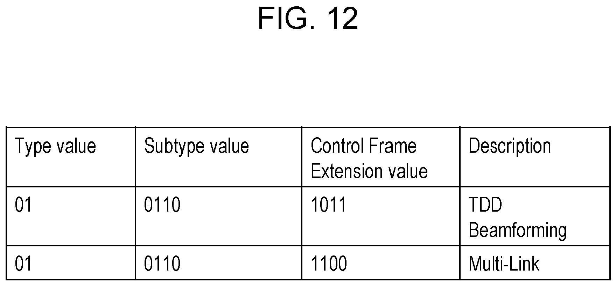

Fig. 12 illustrates an example of an identification table for identifying a Multi-Link Control Frame. In the present example, when the Type value, the Subtype value, and the Control Frame Extension value of a Control Frame are set to 01, 0110, and 1100, respectively, a Control Frame for Multi-Link is assigned separately from the existing Control Frame.

Multi-Link field 1303 indicates the Multi-Link Element illustrated in Fig. 6. Note that, as described in Fig. 6, only some elements of the Multi-Link Element may be indicated here.
In Multi-Link field 1303, Element 1 field 624 of the Multi-Link Element may use the Type value of another Control Frame to indicate the Control Frame format.

Thus, according to the present example, when establishing Multi-Link that includes at least a link in a millimeter-wave band, information pertaining to the link established in the millimeter-wave band can be transmitted on a link established in a frequency band different from the millimeter-wave band. Accordingly, it is thought that information communication related to wireless communication control, including connection processing, can be transmitted more efficiently and reliably to the partner communication device by transmitting in a frequency band in which the transmission and reception of radio waves are more resistant to interruption (high connectivity). For example, a frequency band different from millimeter waves can be used to determine the period in which to perform beamforming at the SLS level or BRP level to be performed in a millimeter-wave band, whether or not beamforming is to be performed after the next DMG Beacon, and the like. Otherwise, Block Ack policy requests and responses may be defined to be issued only in a frequency band different from millimeter waves. The same can also be said for the following examples of information that can be transmitted in a frequency band different from millimeter waves. Likewise, on the receiver side, a small volume of information that is preferably received in a reliable manner may be received in a band other than a millimeter-wave band, while a large volume of highly instantaneous information and data may be received in a millimeter-wave band, and this conceivably could lead to the development of more user-friendly applications. For example, in virtual reality applications and the like, responsiveness is more important than image resolution. In such cases, it is important that communication itself continues even if some data is discarded in the communication layer. Therefore, it is important that control information regarding connectivity and the connection itself is implemented in a frequency band that maintains high connectivity, while a frequency band (millimeter-wave band) allowing for high-volume communication is selected for data frames such as content. In the present example, the Action Frame and the Control Frame are transmitted only in a frequency band different from a millimeter-wave band while data communication is performed only in a millimeter-wave band, but the configuration is not limited thereto. Data communication may also be performed in a frequency band other than a millimeter-wave band, and it is sufficient if at least information that is preferably received in a reliable manner, such the Action Frame and the Control Frame, is communicated in a frequency band other than a millimeter-wave band.

### (Example 2)

The present example describes the case of extending the existing Action Frame defined by the 802.11 series standards when it is desirable to assign information about a different link to an Action Frame. Note that the Control Frame may also be extended in a similar manner.

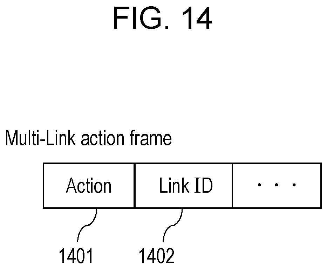

Fig. 14 illustrates an example of a Multi-Link Action Frame format extended for Multi-Link. The extended Action Frame includes Action field 1401 and Link ID field 1402. Action field 1401 takes the format of the Action field defined in IEEE 802.11, and uses the defined values. As an example, consider the case of wanting to transmit a GAS Initial Request Frame for a different link. In this situation, the Action field includes a Category field, a Public Action field, a Dialog Token field, an Advertisement Protocol element field, a Query Request Length field, a Query Request field, and the like. Link ID field 1402 is a field for indicating which link the information is about. For example, the value of this field is set to 2 when indicating Link ID = 2, which indicates a link in the 60 GHz band between the AP 101 and the STA 102 in the present embodiment. Note that since it is sufficient if this field indicates which link the information is about, an identifier indicating any of a MAC address, a frequency channel, a frequency, and a frequency band, or the value itself of any of the above, may also be used instead of Link ID.

Note that the Link ID, MAC address, frequency channel, frequency, or frequency band used to identify a different link as described above may also not be included in the data frame.

According to the present example, by extending the existing Action Frame to support Multi-Link, information exchange for implementation on another link is also possible on a different link.

### (Example 3)

The present example describes a case in which an Action Frame and/or Control Frame for Multi-Link is transmitted before or after an existing Action Frame and/or Control Frame to indicate that the frame sent together is for a different link.

In the present example, first, an existing Action Frame is transmitted (S1511). Thereafter, a complementary Multi-Link Action Frame is transmitted (S1512). By transmitting the Multi-Link Action Frame after the existing Action Frame, it is possible to indicate that the Action Frame transmitted immediately prior contains information about a link indicated by the Multi-Link Action Frame. These multiple frames may also be transmitted collectively in a single transmission opportunity by using frame aggregation.

Note that an example of the format of the Multi-Link Action Frame indicated here may be the format illustrated in Fig. 10, for example. Otherwise, the format may be a combination of Category field 1001 illustrated in Fig. 10 with Link ID field 1402 illustrated in Fig. 14. The Link ID field may also be a field indicating any of a MAC address, a frequency, and a frequency band instead of Link ID information. The order of the Action Frame and the Multi-Link Action Frame may also be reversed.

The above applies to the Control Frame in a similar manner, and a Multi-Link Control Frame may be transmitted after an existing Control Frame to thereby indicate that the Control Frame contains information about another link. The order of the frames may also be reversed.

According to the present example, it is possible to indicate the presence of other link information without modifying the existing Action Frame and/or Control Frame. This simplifies the way of creating information about a link for transmitting information. On the other hand, sequence control is more difficult because the sequence must be obeyed.

### (Other examples)

The examples above describes a method in which information pertaining to a link established in a millimeter-wave band is transmitted on a link established in a frequency band different from a millimeter-wave band. However, the configuration is not limited thereto, and when operating in multiple frequency bands, the frequency band to use may be selected according to the type of frame to be transmitted. For example, when operating in two frequency bands, one frequency band may be used to transmit a frame containing information about a Link ID, a MAC address, a frequency band, or a frequency channel for identifying another link. Meanwhile, control may be applied to make the other frequency band unavailable for transmitting a frame containing information about a Link ID, a MAC address, a frequency band, or a frequency channel for identifying another link.

Also, although the examples above describe Multi-Link in the 60 GHz band and the 5 GHz band, a millimeter-wave band may be used for one or both of the bands to be used. In other words, the 45 GHz band may be used instead of the 60 GHz band. Otherwise, the 2.4 GHz band, the 6 GHz band, a sub-1 GHz band, the 45 GHz band, or the 60 GHz band may be used instead of the 5 GHz band.

The communication device set forth in the present embodiment above may also be a printer with a printing means. In the case of operating as a printer, the communication device is capable of printing image data acquired by communicating with a partner device, for example.

The communication device set forth in the present embodiment above may also be a camera with an imaging means. In the case of operating as a camera, the communication device is capable of transmitting imaged data by communicating with a partner device, for example.

Note that a recording medium containing software program code for achieving the functions described above may be supplied to a system or device, and a computer (CPU, MPU) of the system or device may read out and execute the program code stored in the recording medium. In this case, the program code itself that is read out from the storage medium achieves the functions of the embodiment described above, and thus the storage medium storing the program code constitutes the device described above.

The storage medium used to supply the program code may be, for example, a flexible disk, a hard disk, an optical disc, a magneto-optical disc, a CD-ROM, a CD-R, magnetic tape, a non-volatile memory card, ROM, or a DVD.

Also, the functions described above not only may be achieved not only by executing the program code read out by the computer, but may also be achieved by having an OS running on the computer perform some or all of the actual processing on the basis of instructions in the program code. OS is an acronym for operating system.

Furthermore, the program code read out from the storage medium may be written to a memory provided on a function expansion board inserted into the computer or a function expansion unit connected to the computer. The functions described above may then be achieved by having a CPU provided to the function expansion board or the function expansion unit perform some or all of the actual processing on the basis of instructions in the program code.

The present invention is also achievable by a process of supplying a program for achieving one or more functions of the embodiment described above to a system or a device via a network or a storage medium, and having one or more processors in a computer of the system or device read out and execute the program. The present invention is also achievable by a circuit (for example, an ASIC) that achieves the one or more functions.

The present invention is not limited to the embodiment described above, and various changes and modifications are possible without departing from the spirit and scope of the present invention. Accordingly, the following claims are attached to make public the scope of the invention.

This application claims the benefit of Japanese Patent Application No. 2022-183735 filed November 16, 2022, which is hereby incorporated by reference herein in its entirety.

## Claims

1. A wireless communication device **characterized by** comprising:
a transmitting means for transmitting a wireless frame compliant with an IEEE 802.11 series standard;
an establishing means for establishing a plurality of links between the wireless communication device and another wireless communication device; and
a selecting means for selecting, in a case where the plurality of links include a link in a prescribed frequency band and a link in a frequency band other than the prescribed frequency band, whether to use the link in the prescribed frequency band or the link in the frequency band other than the prescribed frequency band according to a type of frame to be transmitted by the transmitting means.

2. The wireless communication device according to claim **1, characterized in that**
the selecting means selects to use the link in the prescribed frequency band if the frame to be transmitted by the transmitting means is a frame of a first type, and selects to use the link in the frequency band other than the prescribed frequency band if the frame to be transmitted by the transmitting means is a frame of a second type.

3. The wireless communication device according to claim 2, **characterized in that**
the frame of the first type is an Action Frame or a Control Frame.

4. The wireless communication device according to claim 2 or claim 3, **characterized in that**
the frame of the second type is a data frame.

5. The wireless communication device according to claim 3, **characterized in that**
the Action Frame and the Control Frame contain information on any of a Link ID, a MAC address, a frequency band, and a frequency channel for identifying, from among the plurality of links, a link other than the link on which the frame is transmitted.

6. The wireless communication device according to claim 4, **characterized in that**
the data frame does not contain information on any of a Link ID, a MAC address, a frequency band, and a frequency channel for identifying, from among the plurality of links, a link other than the link on which the frame is transmitted.

7. The wireless communication device according to any one of claims 1 to 6, **characterized in that**
the prescribed frequency band is a millimeter-wave band.

8. The wireless communication device according to claim 7, **characterized in that**
the millimeter-wave band includes a 45 GHz band or a 60 GHz band.

9. The wireless communication device according to any one of claims 1 to 8, **characterized in that**
the frequency band other than the prescribed frequency band is a microwave band.

10. The wireless communication device according to claim 9, **characterized in that**
the microwave band includes any of a 2.4 GHz band, a 3.6 GHz band, a 5 GHz band, and a 6 GHz band.

11. A wireless communication device control method **characterized by** comprising:
transmitting a wireless frame compliant with an IEEE 802.11 series standard;
establishing a plurality of links between the wireless communication device and another wireless communication device; and
selecting, in a case where the plurality of links include a link in a prescribed frequency band and a link in a frequency band other than the prescribed frequency band, whether to use the link in the prescribed frequency band or the link in the frequency band other than the prescribed frequency band according to a type of frame to be transmitted in the transmitting.

12. A program for causing a computer to function as each means of the wireless communication device according to any one of claims 1 to 10.
